(19) **Europäisches Patentamt**
**European Patent Office**
**Office européen des brevets**

(11) **EP 4 742 561 A2**

(12) **EUROPEAN PATENT APPLICATION**

(43) Date of publication:
**13.05.2026 Bulletin 2026/20**

(21) Application number: **25209529.4**

(22) Date of filing: **17.10.2025**

(51) International Patent Classification (IPC):
**H04B 10/2513** (2013.01)     **H04B 10/61** (2013.01)

(52) Cooperative Patent Classification (CPC):
**H04B 10/6161; H04B 10/25133**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **18.10.2024 US 202463709268 P**

(71) Applicant: **Marvell Asia Pte Ltd
Singapore 369522 (SG)**

(72) Inventors:
• **Campos, Nestor Daniel
L37 M90 Barrio Parterres, Malagueno (AR)**
• **Martinez Balsa, Agustin
Cordoba, Cordoba (AR)**
• **Olmos Rebellato, Marcos Sebastian
Cordoba, Cordoba (AR)**
• **Morero, Damian Alfonso
Rio Ceballos, Cordoba (AR)**
• **Carrer, Hugo Santiago
Mendiolaza, Cordoba (AR)**
• **Hueda, Mario Rafael
L63M2 La Cascada Country (AR)**

(74) Representative: **Grünecker Patent- und
Rechtsanwälte
PartG mbB
Leopoldstraße 4
80802 München (DE)**

(54) **PILOT-ASSISTED FIBER LENGTH ESTIMATION**

(57)     A pilot-assisted fiber length estimation (FLE) technique estimates chromatic dispersion for optical signals. The pilot-assisted FLE technique is agnostic to the modulation format of the optical payload and is resilient to polarization effects, bandwidth limitations, and signal shaping, thus enabling consistent performance across a wide range of operating conditions. A transmitter periodically inserts a known pilot sequence into an optical signal, and a receiver processes the pilot sequence to estimate the length of the optical fiber, or to estimate chromatic dispersion of the optical fiber, which is related to the fiber length.

FIG. 2

**EP 4 742 561 A2**

**Description**

Priority Application

This patent application claims priority to and/or receives benefit from U.S. Provisional Application No. 63/709,268, titled, "Pilot-assisted Fiber Length Estimation", filed on October 18, 2024. The U.S. Provisional Application is hereby incorporated by reference in its entirety.

Background

High-speed, high-bandwidth communication systems are integral to modem computing and networking applications. These systems are designed to facilitate efficient and reliable data transmission over various media or communication links, including optical fibers, copper cables, and wireless channels. Advances in communication technologies, such as signal modulation, error correction, and clock recovery, can ensure data integrity, reduce latency, and maintain synchronization across devices.

Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

FIG. 1 illustrates an exemplary electronics system, according to some embodiments of the disclosure.
FIG. 2 illustrates an implementation of a digital signal processor in a transceiver, according to some embodiments of the disclosure.
FIG. 3 illustrates an example of an optical signal with a periodically inserted pilot sequence, according to some embodiments of the disclosure.
FIG. 4 illustrates correlation windows for calculating a cost function based on the pilot sequence, according to some embodiments of the disclosure.
FIG. 5 depicts a flow chart illustrating a method for estimating a fiber length and compensating for chromatic dispersion based on the estimate, according to some embodiments of the disclosure.
FIG. 6 shows two plots illustrating data for the coarse search and the fine search, according to some embodiments of the disclosure.
FIG. 7 depicts a flow chart illustrating a method for searching for a fiber length based on pilot sequences, according to some embodiments of the disclosure.
FIG. 8 depicts a flow chart illustrating a method for calculating a correlation-based metric based on pilot sequences, according to some embodiments of the disclosure.

Detailed Description

*Overview*

As artificial intelligence (AI) applications continue to evolve, they demand unprecedented data processing speeds and bandwidth capabilities to support their complex algorithms and massive datasets. Digital signal processors (DSPs), such as optical DSPs and coherent DSPs, can enable high-bandwidth optical interconnects for AI infrastructure. In particular, the DSPs can enable low-latency, high-performance, and energy-efficient data transfer. These DSPs can offer seamless connectivity across AI, cloud computing, enterprise systems, and 5G infrastructure.

The DSPs can implement one or more instances of digital equalizers. Digital equalizers can mitigate signal distortion caused by channel impairments such as chromatic dispersion (CD). These equalizers can adjust the amplitude and phase of incoming signals to compensate for frequency-dependent attenuation, phase shifts, and group delay introduced by the transmission medium. In some implementations, a chromatic dispersion equalizer can be configured as a finite impulse response (FIR) filter or other digital filter architecture, and may be tuned to compensate for a range of dispersion values based on signal characteristics.

In coherent optical receivers, chromatic dispersion compensation is typically performed using a digital filter configured to reverse the frequency-dependent group delay introduced by the transmission fiber. Blind search techniques are often used to estimate chromatic dispersion. In such techniques, the receiver applies a set of candidate equalizer settings, evaluates a cost function for each, and selects settings to minimize the cost function. Cost functions used for blind search may include autocorrelation metrics, peak-to-average power ratio (PAPR), or timing tone analysis. These methods can be sensitive to modulation format and may require reconfiguration when the payload changes. For example, PAPR-based techniques tend to degrade when probabilistic constellation shaping (PCS) is used, as the statistical properties of the shaped data may resemble those of a dispersed signal. Other approaches may struggle under bandwidth-limited conditions or in the presence of polarization mode dispersion (PMD), leading to inaccurate estimates or latency at startup.

To address these limitations, the present disclosure describes a pilot-assisted fiber length estimation technique that can estimate chromatic dispersion for optical signals for any modulation scheme. Pilot-assisted fiber length estimation (PAFLE) is also resilient to polarization effects, bandwidth limitations, and signal shaping, thus enabling consistent performance across a wide range of operating conditions. In PAFLE, a transmitter periodically inserts a known pilot sequence into an optical signal, and a receiver processes the pilot sequence to estimate the length of the optical fiber (or a chromatic dispersion of the optical fiber, which is related to the fiber length).

The pilot sequence can be inserted with minimal overhead, e.g., less than 1%, less than 0.5%, or less than 0.1% than a size of the data blocks between adjacent pilot sequences. This makes the technique suitable for high-speed links and enables efficient hardware deployment. Because the estimation is based on a repeated, known pilot pattern rather than payload-dependent features (as in blind search techniques), the approach is modulation-agnostic and compatible with payloads of different modulation formats, e.g., quadrature phase-shift keying (QPSK), quadrature amplitude modulation (QAM), and (probabilistic constellation shaping) PCS. The metric computation is computationally simple and hardware-friendly, allowing for fast convergence and low complexity in ASIC implementations. These advantages support reliable DSP startup and reduce the need for format-specific tuning or calibration.

As mentioned above, at some implementations, a pilot sequence is periodically inserted into the transmitted optical signal. The pilot sequence may include a repeated pattern, e.g., two identical QPSK encoded patterns. The pilot sequence (e.g., the repeated pattern) may also be inserted in both polarizations. At the receiver, the DSP applies a chromatic dispersion equalizer across a range of candidate dispersion values and computes a correlation-based metric for the candidates. The dispersion value associated with the highest metric can be selected as the estimated chromatic dispersion, which corresponds to the fiber length. This estimate can then be used to configure the equalizer for CD compensation.

In some implementations, the DSP evaluates the pilot sequence using a correlation-based metric that compares disjointed sections of the received signal. The pilot sequence may be processed through a chromatic dispersion equalizer configured for a candidate dispersion value, and a differential signal may be generated to improve robustness against phase noise and carrier frequency offset. The metric can then be computed by correlating two windows of the differential signal. The metric tends to peak when the equalizer setting matches the actual dispersion in the channel. By sweeping across a range of candidate values, the DSP can identify the setting that maximizes the metric, which corresponds to the estimated fiber length. This process can be performed during DSP startup and may be repeated periodically to track changes in the optical link.

In some implementations, the DSP performs a two-stage search to estimate chromatic dispersion. A coarse search may first be executed over a broad range of candidate dispersion values using a larger step size. Based on the results of the coarse search, a finer search may then be performed over a narrower range with a smaller step size to refine the estimate. For different candidate values, the pilot sequence is processed through the chromatic dispersion equalizer, and the correlation-based metric is computed. Using a two-phase search offers both speed and accuracy in estimating chromatic dispersion, making it well-suited for real-time DSP startup and dynamic link conditions. The coarse search with larger step size allows the DSP to quickly identify a rough estimate of chromatic dispersion, and then determine a general region where the chromatic dispersion value may lie. Once this region is identified, the finer search with a smaller step size refines the estimate with greater precision.

*Exemplary communication system*

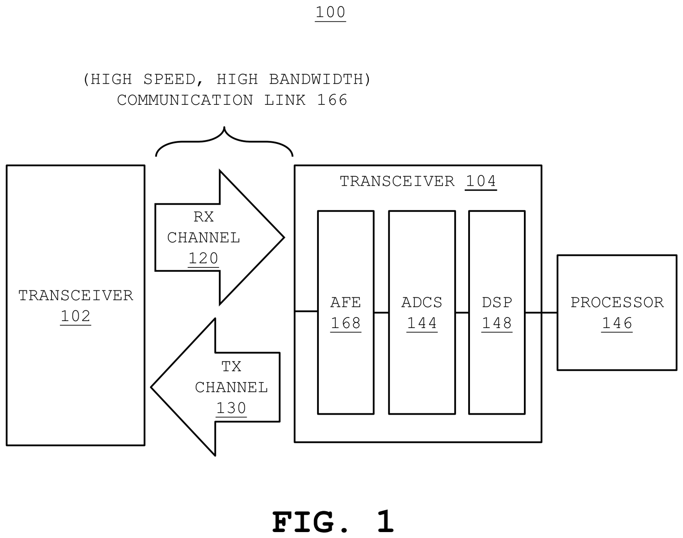

FIG. 1 illustrates an exemplary electronics system 100, according to some embodiments of the disclosure. Electronics system 100 can be used in high-speed, high-bandwidth communication applications. Electronics system 100 can include one or more components to carry out functionalities, including, among other things, effective signal transmission, reception, diagnostics, and clock recovery functionality. Electronics system 100 includes transceiver 102 and transceiver 104. Transceiver 104 can carry out communication functionalities for processor 146. For simplicity, the processor that transceiver 102 is carrying out communication functionalities is omitted in the figure.

Processor 146 may perform data processing tasks. Processor 146 can include one or more suitable types of processors, and one or more suitable number of processors. Processor 146 may be a single-core processor, or a multi-core (e.g., ARM or x86 processor cores). Examples of processor 146 may include a central processing unit (CPU), a graphics processing unit (GPU), a field-programmable gate array (FPGA), a tensor processing unit (TPU), a data processing unit (DPU), a microprocessor, a DSP, an application specific integrated circuit (ASIC), etc. Processor 146 can execute instructions or commands of an operating system. Processor 146 can perform operations and/or computations for an application of electronics system 100.

Transceiver 104 can enable transmission and reception of signals over (high-speed, high-bandwidth) communication link 166. In this example, communication link 166 can include one or more of: receive (RX) channel 120, and transmit (TX) channel 130. RX channel 120 can have one or more RX data lanes. TX channel 130 can have one or more TX data lanes.

Transceiver 102 can transmit data over RX channel 120 to transceiver 104 and can include circuitry to support transmission of data. For example, transceiver 102 may include a DSP (which may include similar functionality to DSP 148) configured to insert a pilot sequence into data transmitted to transceiver 104 over RX channel 120. The pilot sequence may include a repeated pattern inserted periodically into a data signal, and may be inserted into both polarizations, as described herein.

Incoming data signals transmitted over RX channel 120 can be received by transceiver 104. Transceiver 104 has circuitry that processes the received data signals. Transceiver 104 can include an analog front-end (AFE) 168, which may include one or more amplifiers or other analog circuits to process the received data signals before the data signals are provided to analog-to-digital converters (ADCs) 144. ADCs 144 can digitize the analog signals and output digital outputs or digital samples for further processing by DSP 148. For high-speed, high-bandwidth data interfaces, ADCs 144 include time-interleaved ADCs used to sample an analog signal received on RX channel 120 to achieve the baud rate of the communication channel. Time-interleaved ADCs 144 can take turns, one after another, or in a randomized fashion, to sample the received analog signal at different sampling points to produce the digitized samples of the received analog signal.

Transceiver 104 can transmit signals to transceiver 102 via TX channel 130, and transceiver 104 can include additional circuitry to prepare data signals to be transmitted over TX channel 130. Transceiver 104 can include TX circuitry to ensure faithful signal transmission over communication link 166. Transceiver 104 can include TX circuitry (e.g., circuitry in DSP 148) to insert a pilot sequence into the data signal, e.g., as described above with respect to transceiver 102, and as described in further detail below.

DSP 148 can manage data processing tasks within transceiver 104. DSP 148 can include circuitry to perform one or more operations or computations. DSP 148 can include circuitry that can execute instructions and carry out one or more operations or computations. Examples of operations or computations can include, but are not limited to, diagnostics, control algorithms, signal processing, filtering, decision making or slicing, and equalization.

While the description is focused on transceiver 104, it is envisioned that various embodiments described herein are applicable to transceiver 102. It is also envisioned that various embodiments described herein are applicable to receivers (receive-only interfaces), and transmitters (transmit-only interfaces).

*Example DSP with pilot-assisted fiber length estimator to estimate chromatic dispersion*

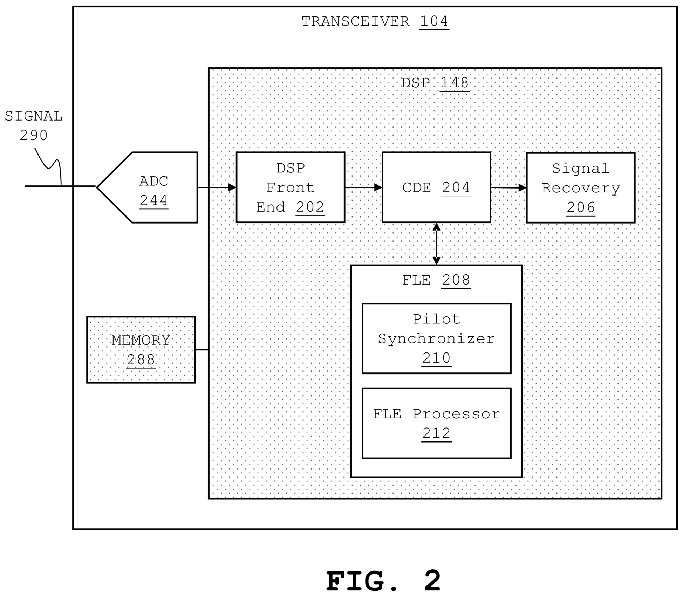

FIG. 2 illustrates an implementation of DSP 148 in transceiver 104, according to some embodiments of the disclosure. As discussed with FIG. 1, DSP 148 can include circuits to support reception of data for transceiver 104. DSP 148 performs digital signal processing, such as equalization to minimize errors in the recovered symbols and preserve signal integrity.

Signal 290 is received by ADC 244. For simplicity, (a single) ADC 244 is depicted in FIG. 2, but it is envisioned that transceiver 104 can have many parallel ADCs (e.g., parallel time-interleaved ADCs 144 of FIG. 1) and the individual outputs of the parallel ADCs 144 can be processed by respective algorithms to extract corresponding symbols.

Signal 290 is digitized or sampled by ADC 244 to produce a digital signal. DSP 148 can include DSP front end 202. DSP front end 202 can include circuitry to perform initial signal conditioning and preprocessing operations on the digitized signal. These operations may include automatic gain control (AGC), DC offset removal, and filtering to suppress out-of-band noise. DSP front end 202 may also perform clock recovery and resampling to align the digitized samples with the symbol timing of the transmitted signal. In some implementations, DSP front end 202 can include a pilot synchronizer 210 configured to detect the presence of pilot sequences in the received signal and provide timing markers for subsequent processing stages. The output of DSP front end 202 can be provided to downstream blocks for further analysis and equalization.

In the implementation of FIG. 2, the output of DSP front end 202 is provided to a chromatic dispersion equalizer (CDE) 204. CDE 204 is configured to compensate for dispersion effects introduced by the optical fiber. CDE 204 may be implemented using a digital filter, such as a finite impulse response (FIR) filter. CDE 204 can be tuned to apply different dispersion compensation settings. As discussed below, during startup and/or on a periodic basis, DSP 148 may sweep CDE 204 across a range of candidate settings and compute a correlation-based metric for each. The setting that yields the highest metric can be selected as the estimated chromatic dispersion, and CDE 204 can be configured accordingly for ongoing compensation.

The equalized signal output from CDE 204 is forwarded to subsequent DSP blocks, represented in FIG. 2 as signal recovery 206, which may include one or more processing blocks configured to extract transmitted symbols from the compensated signal. These blocks may perform operations such as polarization demultiplexing, feedforward equalization, decision feedback equalization, carrier recovery, and phase correction. Depending on the system architecture, signal recovery 206 may jointly process both polarizations and apply adaptive filtering techniques to mitigate inter-symbol interference (ISI), polarization mode dispersion (PMD), and other channel impairments. The specific configuration of signal recovery 206 may vary based on modulation format, symbol rate, and link conditions, and may be implemented using fixed filters, machine learning models, or other signal processing algorithms.

Fiber length estimator (FLE) 208 is configured to estimate the chromatic dispersion in the optical link, which in general is directly related to the physical length of the fiber. FLE 208 may estimate CD upon startup of the transceiver 104. In some cases, FLE 208 may re-estimate CD after startup, e.g., at periodic intervals, or if a change in the network has been detected. To estimate CD, FLE 208 processes a pilot sequence inserted into the incoming signal and calculates a metric across a range of candidate dispersion values. The dispersion value associated with the maximum metric is selected as the estimated chromatic dispersion. This estimate is then used to configure chromatic dispersion equalizer CDE 204, which applies the corresponding compensation setting to the received signal.

In the illustrated implementation, FLE 208 includes pilot synchronizer 210 and FLE processor 212, which operate in coordination with CDE 204 during the estimation process. Pilot synchronizer 210 identifies the location of the pilot sequence and provides timing markers that enable accurate metric computation. Pilot synchronizer 210 may also generate a lock status signal indicating successful detection of the pilot sequence, which can be used by FLE processor 212 to initiate metric computation. FLE processor 212 controls the sweep of candidate dispersion values by dynamically adjusting the configuration of CDE 204, and computing the correlation-based metric for each setting. Once the optimal dispersion value is identified, FLE processor 212 instructs CDE 204 to apply the selected compensation setting for ongoing signal processing.

DSP 148 may execute instructions stored in non-transitory computer-readable media such as memory 288, which may perform one or more functionalities described herein.

*Example pilot sequences and calculations based on pilot sequences*

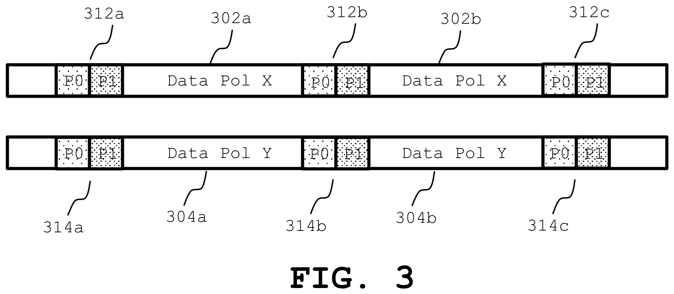

FIG. 3 provides a visual representation of an optical signal with a periodically inserted pilot sequence. The optical signal includes two orthogonal polarizations, referred to in FIG. 3 as polarization X and polarization Y. In each polarization, the optical signal includes data, referred to as Data Pol X and Data Pol Y. For example, in polarization X, the optical signal includes a first data block 302a and a second data block 302b. The data blocks, also referred to as data payload, may use any modulation format, e.g., QPSK, QAM, or PCS.

A pilot sequence 312 is inserted periodically into the data signal, e.g., one instance 312a of the pilot sequence is inserted before data block 302a, another instance 312b of the pilot sequence is inserted between data blocks 302a and 302b, and a third instance 312c is inserted after data block 302b. An additional data block 302 may follow the third instance 312c of the pilot sequence, followed by another instance of the pilot sequence, and so forth. Likewise, in polarization Y, the optical signal includes data blocks, e.g., data blocks 304a and 304b, with instances of pilot sequence 314 (e.g., instances 314a, 314b, and 314c) interspersed between data blocks 304. Instances of pilot sequences 312 and 314 may also be referred to as pilot bursts. Data blocks 302 may follow pilot sequences 312 directly or indirectly, e.g., additional header blocks may be between a pilot sequence 312 and the data block 302 that follows. Pilot sequences 312 and 314 may add minimal overhead to the optical signal. For example, one of the pilot sequences 312 may be less than 1%, less than 0.5%, less that 0.3%, less than 0.1%, or less than 0.05% of the size of one of the data blocks 302.

Each pilot sequence 312 and 314 includes two blocks, labelled P0 and P1 in each instance of pilot sequence 312 and 314. The blocks P0 and P1 may be identical, i.e., the same set of pilot symbols in P0 may be repeated in the P1 block. Repeating an identical block allows for a correlation-based metric to be used, as described further below. Furthermore, different instances of pilot sequences 312 and 314 are identical (e.g., each pilot bursts 312a, 312b, 312c, 314a, 314b, and 314c contains the same two blocks P0 and P1). In some implementations, blocks P0 and P1 are QPSK modulated.

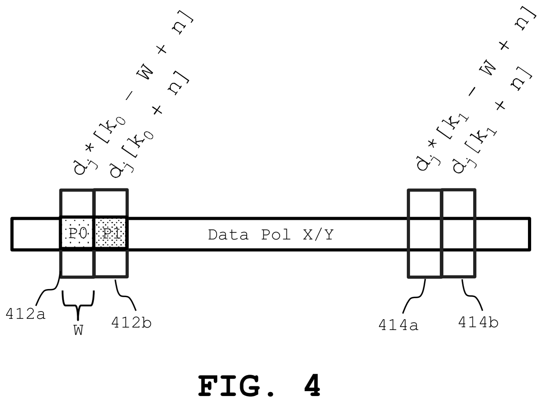

FIG. 4 illustrates correlation windows for calculating a cost function based on the pilot sequence, according to some embodiments of the disclosure. The cost function used in PAFLE is a correlation-based metric that quantifies the similarity between two consecutive blocks, e.g., between blocks P0 and P1 in a given instance of the pilot sequence. FIG. 4 shows two sets of windows 412 and 414. The first set of windows 412a and 412b are aligned with the location of the pilot patterns within an optical signal. For example, windows 412a and 412b may be aligned with pilot burst 312a. The second set of windows 414a and 414b, on the other hand, are not aligned with a burst of the pilot sequence.

The PAFLE algorithm (e.g., the FLE processor 212 of the FLE 208) includes calculating a differential signal $d_j[k]$ for each window, where $j$ refers to polarization (e.g., x or y), and $k$ refers to time or position within the window. For example, for a signal $z$, the PAFLE algorithm may calculate the differential signal as follows:

$$d_j[k] = z_j[k] \cdot z_j^*[k-1]$$

where $z_j[k]$ is the symbol for polarization $j$ at time $k$, and $z_j^*[k\text{-}1]$ is the complex conjugate of the symbol from the previous time step.

The PAFLE algorithm (e.g., the FLE processor 212 of the FLE 208) calculates the CD metric or cost function by comparing the differential signals in adjacent windows. For example, the PAFLE algorithm may calculate the CD metric as the correlation between two disjointed sections of the signal $d_j[k]$, e.g., the CD metric may be calculated as follows:

$$C_j[k] = \mathbb{R}\left\{\sum_{n=0}^{W-1} d_j^*[k - W + n] \cdot d_j[k + n]\right\}$$

where W is the size of the window, as illustrated in FIG. 4, and n is the index of summation across the window length.

The metric $C_j$ tends to reach a maximum when the pilot patterns are properly aligned within the correlation windows. Thus, when the metric is calculated based on an applied dispersion setting that matches the actual chromatic dispersion in the channel, the correlation metric is maximized.

*Example fiber length estimation and compensation*

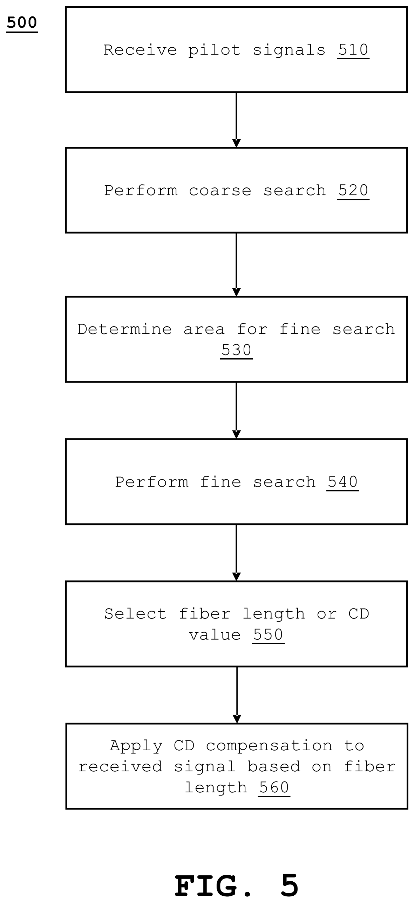

FIG. 5 depicts a flow chart illustrating a method 500 for estimating a fiber length and compensating for chromatic dispersion based on the estimate, according to some embodiments of the disclosure. Method 500 can be performed by a transceiver with a pilot-assisted FLE, e.g., FLE 208. The FLE is configured to perform the PAFLE algorithm as described and illustrated herein.

In 510, a receiver, e.g., transceiver 104, obtains an optical signal that includes a pilot sequence periodically inserted into the data stream. The pilot sequence may be the pilot sequence described with respect to FIG. 3, e.g., a pilot sequence that includes a repeated pattern, such as two identical QPSK-modulated blocks. The pilot sequence may be embedded in both polarizations of the optical signal. As described with respect to FIG. 1, the received signal is digitized by one or more ADCs and passed to a DSP (e.g., DSP 148) for further processing.

In 520, DSP 148 performs a coarse search to estimate CD of the optical fiber. DSP 148 may sweep the CDE 204 across a broad range of candidate dispersion values over a relatively large range and using a relatively large step size. If expressed in fiber lengths, the step size of the coarse search may be, e.g., 5 kilometers (km), 10 km, 20 km, 50 km, 100 km, 200 km, 500 km, or another size, and the range may be from, e.g., between 1 km to 10,000 km, between 10 km and 5000 km, or between 50 km and 2000 km, for example. Alternatively, the step size and/or range may be expressed in CD values, e.g., in picoseconds/nanometer (ps/nm), with a range of, e.g., 20 ps/nm to 200000 ps/nm, for example. The step size and range may be configurable. For example, the step size and/or range may be set based on expected use cases (and more specifically, expected fiber distances) in a particular application or for a particular device.

In the coarse search, for each candidate value, FLE 208 instructs the CDE 204 to process the received pilot sequence, or a set of received pilot sequences, with test CD values. The test CD values may also be referred to as test masks, where a test mask includes one or more settings for CDE 204 based on a test fiber length or test CD value. For each test mask, CDE 204 outputs an equalized signal, and FLE 208 computes a correlation-based metric, e.g., the metric $C_j$ as defined above. The metric may be computed over multiple sequential pilot sequences, e.g., metrics may be calculated for instances 312a, 312b, and 312c of the pilot sequence 312. The metrics are averaged across the bursts; averaging multiple metrics from multiple pilot bursts may improve robustness against noise and signal impairments. In addition, the metrics may be computed for both polarizations, and the metrics for the two polarizations are averaged, which provides resilience to polarization effects on CD.

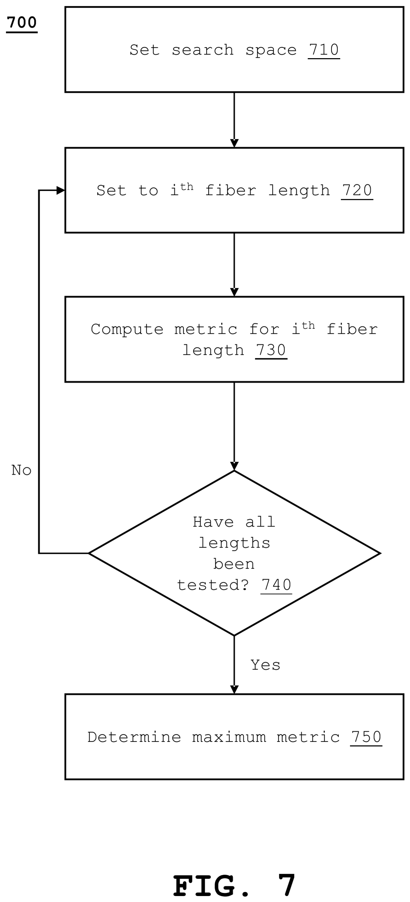

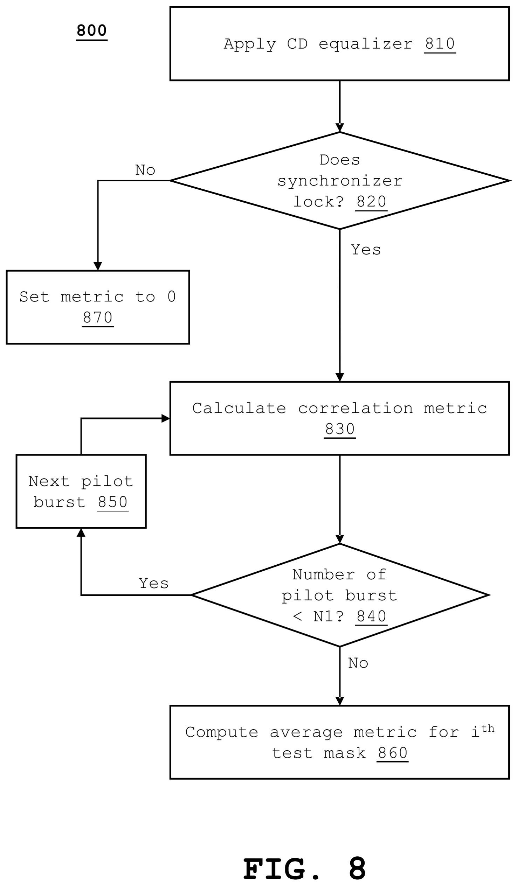

After computing a metric for each step or test mask, FLE 208 identifies the step or test mask that results in the maximum average metric. This step is selected as the coarse estimate of the CD or fiber length. Further details of the coarse search are illustrated in FIGs. 7 and 8, described below. In some embodiments, rather than computing a metric for every test mask, FLE 208 may compute a metric for only a portion of the test masks, e.g., after determining that the maximum has been identified, FLE 208 may stop calculating metrics for further test masks. Likewise, CDE 204 may process a portion of the test masks, if FLE 208 determines that the test mask corresponding to the maximum metric has already been identified.

In 530, FLE 208 determines a search area for a fine search. For example, the FLE 208 may select a region around the CD estimate or fiber length estimate from the coarse search to perform the fine search. FLE 208 may select a range centered on the coarse estimate, e.g., a range that spans from 500 km less than the coarse estimate to 500 km greater than the coarse estimate. As another example, FLE 208 may select a portion of the range in which the calculated metric was above a threshold, e.g., above 0.7 or above 0.8. FLE 208 may have a fixed or configurable step size for the fine search (e.g., 0.1 km, 0.5 km, 1 km, 5 km, etc.). In some embodiments, FLE 208 may determine a step size based on the coarse search, e.g., a smaller step size if the FLE 208 determines a smaller range for the fine search. These are merely examples, and other methods may be used to identify the search area and step size.

In 540, DSP 148 performs a fine search to more precisely estimate CD of the optical fiber. DSP 148 may sweep the CDE 204 across a range of candidate CD values over the smaller range and smaller step size, as identified in 530, and calculate the CD metric (e.g., metric $C_j$) for test masks within this range. The fine search may be similar to the coarse search, but a different set of test masks at closer step sizes are applied. The methods illustrated in FIGs. 7 and 8, described below, also apply to the fine search.

While FIG. 5 illustrates a two-stage search, in other examples, a PAFLE procedure may use more stages or fewer stages. For example, FLE 208 may apply a single-stage search. Alternatively, FLE 208 may perform a search with three or more stages, with a smaller range and smaller step size at each successive stage.

In 550, FLE 208 selects a fiber length and/or CD value. FLE 208 selects the fiber length or CD value associated with the test mask that maximizes the correlation-based metric.

In 560, DSP 148 applies CD compensation or equalization to received optical signals based on the estimated fiber length (or estimated CD value). FLE 208 provides the fiber length or CD value, or settings based on the determined fiber length or CD value, to CDE 204. CDE 204 performs CD compensation on received optical signals based on the determined fiber length, as described with respect to FIG. 2.

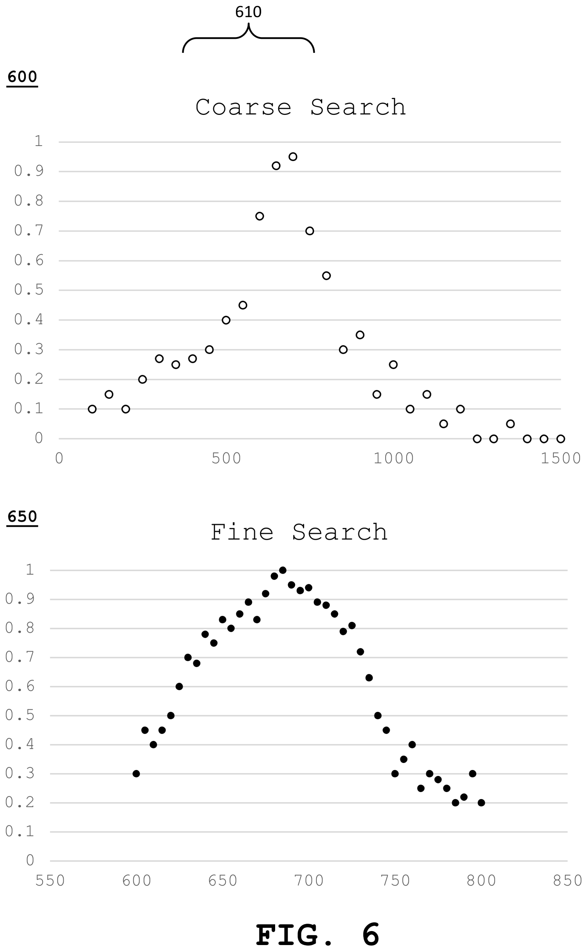

FIG. 6 shows two plots illustrating data for the coarse search and the fine search, according to some embodiments of the disclosure. A first graph 600 plots computed correlation-based metrics, which range from 0 to 1, across the coarse search range, which spans from 100 km to 1500 km with a step size of 50 km. The range and step size are merely exemplary, and other ranges and step sizes may be used. The metric peaks around the fiber length 700 km, and falls off at the other ends of the range. At some test masks, the metric falls to 0; as described in relation to FIG. 8, for some test masks far from that actual fiber length, the pilot synchronizer does not lock, and the PAFLE algorithm may select a metric of 0 in these cases.

FLE 208 identifies a range from the coarse search for performing the fine search. In FIG. 6, a region 610 of the first graph 600 includes the maximum metric from the coarse search. The region 610 is used as the range for the fine search.

A second graph 650 for the fine search plots computed correlation-based metrics, which range from 0 to 1, across the fine search range, which spans from 600 km to 800 km (e.g., the region 610) with a step size of 10 km, which is smaller than the step size from the coarse search. Again, the range and step size are merely exemplary. The range is centered on the test mask from the coarse search that provided the maximum metric, i.e., the test mask for 700 km. The fine search looks more closely at the region around the peak from the coarse search. In this case, the fine search identifies that the peak is at or around 685 km, which is where the metric is maximized. FLE 208 may configure CDE 204 to compensate for CD in incoming optical signals based on a fiber length of 685 km.

*Example search procedure for pilot-assisted fiber length estimation*

FIG. 7 depicts a flow chart illustrating a method 700 for searching for a fiber length based on pilot sequences, according to some embodiments of the disclosure. As noted above, the method 700 illustrates a search procedure that may be repeated for the coarse search and the fine search with different test masks. The coarse search applies test masks over a wider range and with a greater step size than the fine search, as described above.

In 710, FLE 208 (e.g., FLE processor 212) sets a search space, e.g., FLE 208 defines test masks based on a particular range and step size. As noted above, the range and step size for each search may be configurable.

In 720, FLE 208 (e.g., FLE processor 212) selects a mask i, corresponding to one of the fiber lengths. Generally, FLE 208 starts at the lowest test mask (i.e., the test mask associated with the shortest candidate fiber length) in the range and scans upward to the highest mask in the range (i.e., the test mask associated with the longest candidate fiber length), but may proceed in any order.

In 730, FLE 208 (e.g., FLE processor 212, in coordination with pilot synchronizer 210 and CDE 204) computes a metric for the $i^{th}$ fiber length or $i^{th}$ test mask. The metric may be computed according to the formulas provided above. Additional details of the data processing are shown in FIG. 8 and described below.

In 740, FLE 208 (e.g., FLE processor 212) determines whether all fiber lengths (i.e., all test masks) have been tested. If not, FLE 208 returns to 720, increments i, and computes the metric for the next fiber length. If FLE 208 determines in 740 that all test masks in the search space have been tested, FLE 208 identifies the maximum metric in the search space, and the associated test mask or fiber length.

FIG. 8 depicts a flow chart illustrating a method 800 for calculating a correlation-based metric based on pilot sequences, according to some embodiments of the disclosure. Method 800 is an example procedure for 730 of FIG. 7, discussed above. Method 800 may be performed in the coarse search and the long search to determine a correlation-based metric, or cost function, for a given one of the test masks.

In 810, DSP 148 applies CDE 204 with settings for a particular test mask to an optical signal. The optical signal includes one more pilot sequences, e.g., as described with respect to FIG. 3.

In 820, DSP 148 (e.g., pilot synchronizer 210) determines whether the CDE 204 locks under the selected test mask. Pilot synchronizer 210 is configured to detect the pilot sequences in the signal output by CDE 204 (e.g., the signal $z_j$ $[k]$, as described above in discussion of FIG. 4). Pilot synchronizer 210 may generate synchronization markers that are used in subsequent processing stages to isolate the pilot sequence. Pilot synchronizer 210 may also output a lock status flag indicating successful detection of the pilot sequence.

If pilot synchronizer 210 outputs a flag indicating that the pilot sequence was not detected, the PAFLE algorithm proceeds to 870, in which FLE 208 sets the metric to 0 for the test mask being tested. If pilot synchronizer 210 outputs a flag indicating that the pilot sequence was detected, the PAFLE algorithm proceeds to 830.

In 830, FLE 208 calculates the correlation metric for the test mask based on a detected pilot sequence. FLE processor 212 may calculate the correlation metric for a given pilot sequence according to the formula for $C_j[k]$ provided above. The formula for $C_j[k]$ provides a correlation metric for one instance of a pilot sequence (i.e., one pilot burst) on one polarization, e.g., instance 312a or 314a.

As noted above, FLE 208 may combine correlation metrics from multiple pilot bursts, and from both polarizations. FLE 208 may have a setting N1 for the number of pilot bursts to use when calculating the metric for a given test mask. In some implementations, N1 may be configurable. In some implementations, different numbers of pilot bursts may be used at different points in the PALFE algorithm, e.g., one value for N1 for the coarse search and a different value for N1 for the fine search, or a dynamic value for N1 that changes based on similarity between the metrics $C_j[k]$ for a given test mask or for a given optical signal. For example, FLE 208 may compute the metric for a given test mask when the metrics $C_j[k]$ converge or substantially converge, which may occur before the number N1 of pilot bursts have been processed.

In 840, FLE 208 determines if the number of pilot bursts is less than the number N1 of pilot bursts to use to calculate the correlation-based metric. If N1 has not been reached, at 850, FLE 208 moves to the next pilot burst inserted in the optical signal. The PAFLE algorithm proceeds again to 830, and calculates the correlation metric for the next pilot burst. In some implementations, prior to moving to the next pilot burst, FLE 208 may test one or more other conditions, e.g., whether the metrics have converged for the test mask.

If N1 has been reached, or if other conditions are met (e.g., the correlation metric has converged), FLE 208 computes the average metric across the pilot bursts for the i$^{th}$ test mask. The average metric across the pilot bursts is the metric for the test mask. While FIG. 8 does not distinguish the two polarizations, the method 800 may be performed on both polarizations, and the correlation metrics for the two polarizations are averaged and used and the correlation metric for the test mask.

*Select examples*

Example 1 provides a method for estimating a length of an optical fiber for chromatic dispersion compensation, the method including receiving, from the optical fiber, an optical signal that includes a pilot sequence, the pilot sequence including a repeated pattern; at a plurality of steps corresponding to different fiber lengths, applying a chromatic dispersion (CD) equalizer to the pilot sequence; for at least some of the plurality of steps, computing a correlation-based metric based on the pilot sequence; and selecting one of the plurality of steps that maximizes the correlation-based metric, where the selected step corresponds to an estimated fiber length of the optical fiber.

Example 2 provides the method of example 1, where the optical signal includes a first polarization and a second polarization, and the pilot sequence includes the repeated pattern in the first polarization and in the second polarization.

Example 3 provides the method of example 1, where a data payload follows (e.g., directly follows or indirectly follows) the pilot sequence.

Example 4 provides the method of example 1, further including selecting a setting of a digital filter for the CD equalizer based on the selected step or the estimated length of the optical fiber; compensating CD of the received optical signal using the digital filter of the CD equalizer; and outputting a filtered optical signal.

Example 5 provides the method of example 1, where, for a particular step of the plurality of steps, the method includes receiving a plurality of the pilot sequences, where the pilot sequences is included periodically in the optical signal; for each of the plurality of pilot sequences, computing one of a plurality of correlation-based metrics; calculating an average of the plurality of correlation-based metrics; where the average of the plurality of correlation-based metrics is used to as the correlation-based metric for the particular step of the plurality of steps.

Example 6 provides the method of example 1, where, for a particular step of the plurality of steps, applying the CD equalizer to the pilot sequence includes configuring the CD equalizer to compensate for a candidate chromatic dispersion value corresponding to the particular step; and processing the received pilot sequence using the configured equalizer to generate an output signal for metric computation.

Example 7 provides the method of example 6, where an equalized symbol from the CD equalizer for a polarization j is represented as $z_j[k]$, and computing the correlation-based metric includes computing a differential signal $d_j[k]$ of the output signal $z_j[k]$; and calculating a cost function between two disjointed sections of the differential signal $d_j[k]$, where the cost function is the correlation-based metric.

Example 8 provides the method of example 7, where the differential signal is calculated according to:

$$d_j[k] = z_j[k] \cdot z_j^*[k-1]$$

where $z_j[k]$ is the symbol for a polarization $j$ at time $k$, and $z_j^*[k-1]$ is the complex conjugate of the symbol from a previous time step.

Example 9 provides the method of example 8, where the cost function is calculated according to:

$$C_j[k] = \mathbb{R}\left\{\sum_{n=0}^{W-1} d_j^*[k-W+n] \cdot d_j[k+n]\right\}$$

where W is a window length corresponding to a length of the pattern in the pilot sequence, and n is an index of summation across the window length.

Example 10 provides the method of example 1, where the plurality of steps have a first step size, the method further including identifying a range of step sizes based on computed values of the correlation-based metric; at a second plurality of steps corresponding to different fiber lengths, applying the chromatic dispersion (CD) equalizer to the received pilot sequence, where the second plurality of steps have a second step size that is smaller than the first step size; for each of the second plurality of steps, computing the correlation-based metric based on the pilot sequence; and selecting one of the second plurality of steps that maximizes the correlation-based metric.

Example 11 provides a method for chromatic dispersion (CD) compensation of an optical signal received over an optical fiber, the method including receiving, from the optical fiber, an optical signal including two polarizations, the optical signal includes multiple instances of a pilot sequence at periodic intervals on both polarizations of the optical signal, where the pilot sequence includes a repeated pattern, and portions of a data signal are between instances of the pilot sequence; selecting a setting for CD compensation based on received instances of the pilot sequence in the optical signal; and compensating CD in the optical signal according to the selected setting.

Example 12 provides the method of example 11, where, at a particular instance of the pilot sequence, the pilot sequence includes two instances of the repeated pattern.

Example 13 provides the method of example 11, where a first length of the pilot sequence is less than 0.1% of a second length of a portion of the data signal between two adjacent instances of the pilot sequence.

Example 14 provides the method of example 11, where the pilot sequence is quadrature phase-shift keying (QPSK) encoded.

Example 15 provides the method of example 11, where selecting a setting for CD compensation includes performing a first search for a CD value based on a first range of CD values and a first step size between consecutive CD values in the first range; and performing a second search for the CD value based on a second range of CD values, where the second range is smaller than the first range, and a second step size between consecutive CD values in the second range, where the second step size is smaller than the first step size; where the selected setting is based on a result of the second search.

Example 16 provides the method of example 11, where selecting the setting for CD compensation includes computing a plurality of cost functions based on the pilot sequence, where different ones of the plurality of cost functions correspond to different test CDs; and selecting the test CD associated with a maximum value of the plurality of cost functions.

Example 17 provides an integrated circuit (IC) for compensating chromatic dispersion (CD) of an optical signal, the IC including a front end component to receive an optical signal from an optical fiber coupled to the IC, the optical signal including a pilot sequence at periodic intervals on the optical signal, the pilot sequence including a repeated pattern; a fiber length estimator (FLE) configured to determine a length of the optical fiber coupled to the IC based on the pilot sequence, and determine a CD setting for the IC; and a CD equalizer (CDE) configured to compensate for CD in the received optical signal based on the CD setting.

Example 18 provides the IC of example 17, where the IC further includes a transmit module configured to periodically insert the pilot sequence into an optical signal.

Example 19 provides the IC of example 17, where the FLE is configured to: instruct the CDE to apply a first CD setting to the optical signal including the pilot sequence; calculate a first metric based on a first output signal from the CD applying the first CD setting; instruct the CDE to apply a second CD setting to the optical signal including the pilot sequence; calculate a second metric based on a second output signal from the CD applying the second CD setting; and determine the length of the optical fiber based on the first metric and the second metric.

Example 20 provides the IC of example 17, where the FLE includes a pilot synchronizer configured to identify the pilot sequence in an output signal from the CDE.

Example 21 provides the IC of example 17, where the optical signal includes a first polarization and a second polarization, and the pilot sequence includes the repeated pattern in the first polarization and in the second polarization.

Example 22 provides the IC of example 17, where a first length of the pilot sequence is less than 0.1% of a second length of a portion of data signal between two adjacent instances of the pilot sequence.

Example 23 provides the IC of example 17, where the pilot sequence is quadrature phase-shift keying (QPSK) encoded.

*Variations and other notes*

The detailed description, such as the "Select examples" section, provide various examples of the embodiments disclosed herein.

As used herein, the term "coupled to" or "coupled with" refers to a relationship between electronic components or circuit elements wherein the components are in electronic communication with one another and capable of transmitting and/or receiving electrical signals between them. The term "coupled to" does not require a direct physical or electrical connection between the coupled components. Rather, "coupled to" can encompass arrangements where the components are connected through one or more intervening elements, components, circuits, or transmission paths. For example, a first component may be "coupled to" a second component through intermediate components such as resistors, capacitors, inductors, transistors, logic gates, buses, transformers, or other electronic components, or through intermediate transmission paths, while still maintaining the capability for electronic communication between the first and second components.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

The following is a list of further preferred embodiments of the invention:

Embodiment 1. A method for estimating a length of an optical fiber for chromatic dispersion compensation, the method comprising:

receiving, from the optical fiber, an optical signal that includes a pilot sequence, the pilot sequence comprising a repeated pattern;

at a plurality of steps corresponding to different fiber lengths, applying a chromatic dispersion (CD) equalizer to the pilot sequence;

for at least some of the plurality of steps, computing a correlation-based metric based on the pilot sequence; and

selecting one of the plurality of steps that maximizes the correlation-based metric, wherein the selected step corresponds to an estimated fiber length of the optical fiber.

Embodiment 2. The method of claim 1, wherein the optical signal comprises a first polarization and a second polarization, and the pilot sequence comprises the repeated pattern in the first polarization and in the second polarization.

Embodiment 3. The method of claim 1, wherein a data payload follows the pilot sequence.

Embodiment 4. The method of claim 1, further comprising:

selecting a setting of a digital filter for the CD equalizer based on the selected step or the estimated length of the optical fiber;

compensating CD of the received optical signal using the digital filter of the CD equalizer; and

outputting a filtered optical signal.

Embodiment 5. The method of claim 1, wherein, for a particular step of the plurality of steps, the method comprises:

receiving a plurality of the pilot sequences, wherein the pilot sequences is included periodically in the optical signal;

for each of the plurality of pilot sequences, computing one of a plurality of correlation-based metrics;

calculating an average of the plurality of correlation-based metrics;

wherein the average of the plurality of correlation-based metrics is used to as the correlation-based metric for the particular step of the plurality of steps.

Embodiment 6. The method of claim 1, wherein, for a particular step of the plurality of steps, applying the CD equalizer to the pilot sequence comprises:

configuring the CD equalizer to compensate for a candidate chromatic dispersion value corresponding to the particular step; and

processing the received pilot sequence using the configured equalizer to generate an output signal for metric computation.

Embodiment 7. The method of claim 6, wherein an equalized symbol from the CD equalizer for a polarization j is represented as $z_j[k]$, and computing the correlation-based metric comprises:

computing a differential signal $d_j[k]$ of the output signal $z_j[k]$; and

calculating a cost function between two disjointed sections of the differential signal $d_j[k]$, wherein the cost function is the correlation-based metric.

Embodiment 8. The method of claim 7, wherein the differential signal is calculated according to:

$$d_j[k] = z_j[k] \cdot z_j^*[k-1]$$

wherein $z_j[k]$ is the symbol for a polarization $j$ at time $k$, and $z_j^*[k\text{-}1]$ is the complex conjugate of the symbol from a previous time step.

Embodiment 9. The method of claim 8, wherein the cost function is calculated according to:

$$C_j[k] = \mathbb{R}\left\{\sum_{n=0}^{W-1} d_j^*[k-W+n] \cdot d_j[k+n]\right\}$$

wherein W is a window length corresponding to a length of the pattern in the pilot sequence, and n is an index of summation across the window length.

Embodiment 10. The method of claim 1, wherein the plurality of steps have a first step size, the method further comprising:

    identifying a range of step sizes based on computed values of the correlation-based metric;
    at a second plurality of steps corresponding to different fiber lengths, applying the chromatic dispersion (CD) equalizer to the received pilot sequence, wherein the second plurality of steps have a second step size that is smaller than the first step size;
    for each of the second plurality of steps, computing the correlation-based metric based on the pilot sequence; and
    selecting one of the second plurality of steps that maximizes the correlation-based metric.

Embodiment 11. A method for chromatic dispersion (CD) compensation of an optical signal received over an optical fiber, the method comprising:

    receiving, from the optical fiber, an optical signal comprising two polarizations, the optical signal comprises multiple instances of a pilot sequence at periodic intervals on both polarizations of the optical signal, wherein the pilot sequence comprises a repeated pattern, and portions of a data signal are between instances of the pilot sequence;
    selecting a setting for CD compensation based on received instances of the pilot sequence in the optical signal; and
    compensating CD in the optical signal according to the selected setting.

Embodiment 12. The method of claim 11, wherein, at a particular instance of the pilot sequence, the pilot sequence comprises two instances of the repeated pattern.

Embodiment 13. The method of claim 11, wherein a first length of the pilot sequence is less than 0.1% of a second length of a portion of the data signal between two adjacent instances of the pilot sequence.

Embodiment 14. The method of claim 11, wherein the pilot sequence is quadrature phase-shift keying (QPSK) encoded.

Embodiment 15. The method of claim 11, wherein selecting a setting for CD compensation comprises:

    performing a first search for a CD value based on a first range of CD values and a first step size between consecutive CD values in the first range; and
    performing a second search for the CD value based on a second range of CD values, wherein the second range is smaller than the first range, and a second step size between consecutive CD values in the second range, wherein the second step size is smaller than the first step size;
    wherein the selected setting is based on a result of the second search.

Embodiment 16. The method of claim 11, wherein selecting the setting for CD compensation comprises:

    computing a plurality of cost functions based on the pilot sequence, wherein different ones of the plurality of cost functions correspond to different test CDs; and

selecting the test CD associated with a maximum value of the plurality of cost functions.

Embodiment 17. An integrated circuit (IC) for compensating chromatic dispersion (CD) of an optical signal, the IC comprising:

a front end component to receive an optical signal from an optical fiber coupled to the IC, the optical signal comprising a pilot sequence at periodic intervals on the optical signal, the pilot sequence comprising a repeated pattern;
a fiber length estimator (FLE) configured to determine a length of the optical fiber coupled to the IC based on the pilot sequence, and determine a CD setting for the IC; and
a CD equalizer (CDE) configured to compensate for CD in the received optical signal based on the CD setting.

Embodiment 18. The IC of claim 17, wherein the IC further comprises a transmit module configured to periodically insert the pilot sequence into an optical signal.

Embodiment 19. The IC of claim 17, wherein the FLE is configured to:

instruct the CDE to apply a first CD setting to the optical signal comprising the pilot sequence;
calculate a first metric based on a first output signal from the CD applying the first CD setting;
instruct the CDE to apply a second CD setting to the optical signal comprising the pilot sequence;
calculate a second metric based on a second output signal from the CD applying the second CD setting; and
determine the length of the optical fiber based on the first metric and the second metric.

Embodiment 20. The IC of claim 17, wherein the FLE comprises a pilot synchronizer configured to identify the pilot sequence in an output signal from the CDE.

Embodiment 21. The IC of claim 17, wherein the optical signal comprises a first polarization and a second polarization, and the pilot sequence comprises the repeated pattern in the first polarization and in the second polarization.

Embodiment 22. The IC of claim 17, wherein a first length of the pilot sequence is less than 0.1% of a second length of a portion of data signal between two adjacent instances of the pilot sequence.

Embodiment 23. The IC of claim 17, wherein the pilot sequence is quadrature phase-shift keying (QPSK) encoded.

## Claims

1. A method for estimating a length of an optical fiber for chromatic dispersion compensation, the method comprising:

receiving, from the optical fiber, an optical signal that includes a pilot sequence, the pilot sequence comprising a repeated pattern;
at a plurality of steps corresponding to different fiber lengths, applying a chromatic dispersion (CD) equalizer to the pilot sequence;
for at least some of the plurality of steps, computing a correlation-based metric based on the pilot sequence; and
selecting one of the plurality of steps that maximizes the correlation-based metric, wherein the selected step corresponds to an estimated fiber length of the optical fiber.

2. The method of claim 1, wherein the optical signal comprises a first polarization and a second polarization, and the pilot sequence comprises the repeated pattern in the first polarization and in the second polarization.

3. The method of claim 1 or 2, wherein a data payload follows the pilot sequence.

4. The method of one of claims 1 to 3, further comprising:

selecting a setting of a digital filter for the CD equalizer based on the selected step or the estimated length of the optical fiber;
compensating CD of the received optical signal using the digital filter of the CD equalizer; and
outputting a filtered optical signal.

5. The method of one of claims 1 to 4, wherein, for a particular step of the plurality of steps, the method comprises:

receiving a plurality of the pilot sequences, wherein the pilot sequences is included periodically in the optical signal;
for each of the plurality of pilot sequences, computing one of a plurality of correlation-based metrics;
calculating an average of the plurality of correlation-based metrics;
wherein the average of the plurality of correlation-based metrics is used to as the correlation-based metric for the particular step of the plurality of steps.

6. The method of one of claims 1 to 5, wherein, for a particular step of the plurality of steps, applying the CD equalizer to the pilot sequence comprises:

configuring the CD equalizer to compensate for a candidate chromatic dispersion value corresponding to the particular step; and
processing the received pilot sequence using the configured equalizer to generate an output signal for metric computation.

7. The method of claim 6, wherein an equalized symbol from the CD equalizer for a polarization j is represented as $z_j[k]$, and computing the correlation-based metric comprises:

computing a differential signal $d_j[k]$ of the output signal $z_j[k]$; and
calculating a cost function between two disjointed sections of the differential signal $d_j[k]$, wherein the cost function is the correlation-based metric, and/or
wherein the differential signal is calculated according to:

$$d_j[k] = z_j[k] \cdot z_j^*[k-1]$$

wherein $z_j[k]$ is the symbol for a polarization $j$ at time $k$, and $z_j^*[k-1]$ is the complex conjugate of the symbol from a previous time step, and/or
wherein the cost function is calculated according to:

$$C_j[k] = \mathbb{R}\left\{ \sum_{n=0}^{W-1} d_j^*[k-W+n] \cdot d_j[k+n] \right\}$$

wherein W is a window length corresponding to a length of the pattern in the pilot sequence, and n is an index of summation across the window length.

8. The method of one of claims 1 to 7, wherein the plurality of steps have a first step size, the method further comprising:

identifying a range of step sizes based on computed values of the correlation-based metric;
at a second plurality of steps corresponding to different fiber lengths, applying the chromatic dispersion (CD) equalizer to the received pilot sequence, wherein the second plurality of steps have a second step size that is smaller than the first step size;
for each of the second plurality of steps, computing the correlation-based metric based on the pilot sequence; and
selecting one of the second plurality of steps that maximizes the correlation-based metric.

9. A method for chromatic dispersion (CD) compensation of an optical signal received over an optical fiber, the method comprising:

receiving, from the optical fiber, an optical signal comprising two polarizations, the optical signal comprises multiple instances of a pilot sequence at periodic intervals on both polarizations of the optical signal, wherein the pilot sequence comprises a repeated pattern, and portions of a data signal are between instances of the pilot sequence;
selecting a setting for CD compensation based on received instances of the pilot sequence in the optical signal; and

compensating CD in the optical signal according to the selected setting.

10. The method of claim 9, wherein, at a particular instance of the pilot sequence, the pilot sequence comprises two instances of the repeated pattern, or

wherein a first length of the pilot sequence is less than 0.1% of a second length of a portion of the data signal between two adjacent instances of the pilot sequence, or
wherein the pilot sequence is quadrature phase-shift keying (QPSK) encoded.

11. The method of claim 9 or 10, wherein selecting a setting for CD compensation comprises:

performing a first search for a CD value based on a first range of CD values and a first step size between consecutive CD values in the first range; and
performing a second search for the CD value based on a second range of CD values, wherein the second range is smaller than the first range, and a second step size between consecutive CD values in the second range, wherein the second step size is smaller than the first step size;
wherein the selected setting is based on a result of the second search.

12. The method of one of claims 9 to 11, wherein selecting the setting for CD compensation comprises:

computing a plurality of cost functions based on the pilot sequence, wherein different ones of the plurality of cost functions correspond to different test CDs; and
selecting the test CD associated with a maximum value of the plurality of cost functions.

13. An integrated circuit (IC) for compensating chromatic dispersion (CD) of an optical signal, the IC comprising:

a front end component to receive an optical signal from an optical fiber coupled to the IC, the optical signal comprising a pilot sequence at periodic intervals on the optical signal, the pilot sequence comprising a repeated pattern;
a fiber length estimator (FLE) configured to determine a length of the optical fiber coupled to the IC based on the pilot sequence, and determine a CD setting for the IC; and
a CD equalizer (CDE) configured to compensate for CD in the received optical signal based on the CD setting.

14. The IC of claim 13, wherein the IC further comprises a transmit module configured to periodically insert the pilot sequence into an optical signal.

15. The IC of claim 13, wherein the FLE is configured to:

instruct the CDE to apply a first CD setting to the optical signal comprising the pilot sequence;
calculate a first metric based on a first output signal from the CD applying the first CD setting;
instruct the CDE to apply a second CD setting to the optical signal comprising the pilot sequence;
calculate a second metric based on a second output signal from the CD applying the second CD setting; and
determine the length of the optical fiber based on the first metric and the second metric, or
wherein the FLE comprises a pilot synchronizer configured to identify the pilot sequence in an output signal from the CDE, or
wherein the optical signal comprises a first polarization and a second polarization, and the pilot sequence comprises the repeated pattern in the first polarization and in the second polarization, or
wherein a first length of the pilot sequence is less than 0.1% of a second length of a portion of data signal between two adjacent instances of the pilot sequence, or
wherein the pilot sequence is quadrature phase-shift keying (QPSK) encoded.

<u>100</u>

(HIGH SPEED, HIGH BANDWIDTH)
COMMUNICATION LINK 166

**FIG. 1**

TRANSCEIVER 104

DSP 148

SIGNAL 290

ADC 244

DSP Front End 202

CDE 204

Signal Recovery 206

FLE 208

Pilot Synchronizer 210

FLE Processor 212

MEMORY 288

# FIG. 2

312a    302a    312b    302b    312c

| | P0 | P1 | Data Pol X | P0 | P1 | Data Pol X | P0 | P1 | |

| | P0 | P1 | Data Pol Y | P0 | P1 | Data Pol Y | P0 | P1 | |

314a    304a    314b    304b    314c

# FIG. 3

$d_j*[k_0 - W + n]$

$d_j[k_0 + n]$

$d_j*[k_1 - W + n]$

$d_j[k_1 + n]$

P0  P1

Data Pol X/Y

412a    W    412b        414a    414b

## FIG. 4

500

Receive pilot signals 510

Perform coarse search 520

Determine area for fine search 530

Perform fine search 540

Select fiber length or CD value 550

Apply CD compensation to received signal based on fiber length 560

# FIG. 5

FIG. 6

700

Set search space 710

Set to $i^{th}$ fiber length 720

Compute metric for $i^{th}$ fiber length 730

No

Have all lengths been tested? 740

Yes

Determine maximum metric 750

# FIG. 7

800

Apply CD equalizer 810

Does synchronizer lock? 820

No → Set metric to 0 870

Yes

Calculate correlation metric 830

Next pilot burst 850

Number of pilot burst < N1? 840

Yes

No

Compute average metric for $i^{th}$ test mask 860

# FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63709268